# EUROPEAN PATENT SPECIFICATION

(11) **EP 2 295 289 B1**
(45) Date of publication and mention of the grant of the patent: **19.12.2018**
(21) Application number: 10175645.0
(22) Date of filing: 07.09.2010
(51) Int. Cl.: B60P 3/38, A47C 17/80, B62D 33/06

(54) **Method, system and devices for fitting a bunk in a limited space**
Verfahren, System und Vorrichtungen zur Montage eines Etagenbetts auf begrenztem Raum
Procédé, système et dispositifs pour insérer une couchette dans un espace limité

(30) Priority: 14.09.2009 SE 0950666
(43) Date of publication of application: 16.03.2011
(73) Proprietor: Scania CV AB, 151 87 Södertälje (SE)
(72) Inventor: Erlandsson, Kristina, 590 91 Hjorted (SE); Karlsson, Olov, 152 52 Södertälje (SE); Bergström, Mårten, 117 27 Stockholm (SE); Häger, Bengt, 531 91 Vinninga (SE); Pernius, Per, 579 40 Berga (SE); Karlsson, Stefhan, 640 34 Sparreholm (SE); Backhans, Emil, 416 71 Göteborg (SE); Nyström, Kaj, 570 90 Påskallavik (SE); Söder, Kenneth, 151 39 Södertälje (SE)
(74) Representative: Scania CV AB

(56) References cited:
- EP-A2- 1 270 381
- US-A1- 2005 104 415

## Description

### TECHNICAL FIELD

The present invention relates to a method, a system and devices for fitting a bunk in a limited space. The invention relates more specifically to a method, a system and devices for fitting a bunk at a rear wall/inner panel in a vehicle cab, and relates particularly to fitting a bunk which is of variable and adjustable width.

### STATE OF THE ART

Particularly in heavy/commercial vehicles it is desirable to provide a bunk in the cab to enable the driver to rest during long journeys/assignments. The bunk is usually situated behind the front row of seats, i.e. behind the driving and passenger seats. It is advantageous if the bunk can be narrowed, compressed, when not in use, so that the driving seat can unobstructedly be placed in such a position, possibly pushed far back, as to provide the driver with a good and comfortable driving posture. It is also advantageous if the bunk can be widened, expanded, when it is to be used for resting, since it will thus provide better comfort for the resting person. The bunk may also partly serve as an extra sitting location, e.g. when the vehicle is stationary, during breaks, etc. At such times it is primarily the central portion of the bunk which will be usable as a surface to sit on, since it is readily accessible between the front seats. If the bunk is used as a sitting location, it is advantageous if its springing is then slightly harder than when used for resting, to which end the bunk will need to be in a compressed state in which the springs in the mattress are closer together. The compressed state will also result in more legroom relative to the remainder of the cab interior, the instrument panel etc. Bunks of variable and adjustable width are already known and are not described in more detail here.

The production of commercial/heavy vehicles always involves endeavouring to achieve more cost-effective constructional solutions and better methods for the assembly of parts in order to reduce manufacturing costs and achieve competitive advantages. Bunks of the kind here concerned comprise, owing to their construction, a number of parts, thereby increasing the weight of the bunk. This complicates manufacture. The bunk has to be lifted into the cab through the apertures normally provided in the cab, i.e. via the windscreen, side windows or doors, and thereafter be positioned correctly within the limited and cramped space in the cab. There is usually only room for one fitter in the cab during the fitting operation and he/she will only be able to be at the bunk's forward long side and will therefrom have to lift and manoeuvre the bunk into position and thereafter fit it firmly in the cab's supporting structure and/or in the cab's rear wall/inner panel by means of suitable tools and threaded connections. This is a burdensome and stressful operation even if lifting aids intended for the purpose are used as far as possible.

An example of a bunk in a commercial vehicle is shown in EP 1270381 A2 which comprises a rear wall, an auxiliary seat which is accommodated in a position adjacent to said rear wall, and a transverse, movable bunk, which is disposed above said auxiliary seat and is adjustable between a raised inoperative position in which said movable bunk allows said auxiliary seat to be used, and a lowered, horizontal operating position.

The state of the art in this field does not solve the problem of easily, quickly and safely fitting a relatively heavy bunk in a limited space. It is usually necessary for two or more fitters to do heavy lifting and/or work in awkward postures.

### SUMMARY OF THE INVENTION

An object of the invention is to solve the above problem and propose a fitting method of the kind indicated in the introduction which renders correct fitting of bunks in limited spaces easier, quicker and safer.

A further object of the invention is to propose a system which makes it possible to fit a bunk of said kind in limited spaces easily, quickly and safely.

A further object of the invention is to propose a guide device to make it easier to move a bunk to a final fitting position.

A further object of the invention is to propose a mounting means which makes it possible to fit the bunk easily, quickly and safely and whereby the bunk's own weight is used to cause it to be locked firmly to the wall/inner panel.

A further object of the invention is that the mounting means should be so configured as to make it possible to fold the bunk up and down after completion of fitting.

A further object of the invention is to propose a bracket which makes it easier to fit the bunk to the mounting easily, quickly and safely.

These and further objects and advantages are achieved according to the invention by a method, a system and devices according to the features indicated in the characterising parts of claims 1, 4, 5, 9, 11, 12 and 14.

The invention thus relates to a fitting method, a system and devices for making it easier to fit a bunk in a limited space, e.g. in a vehicle cab. The invention relates in particular to bunks which are of variable and optionally adjustable width, since these bunks often comprise many parts which make them heavier and hence more difficult to handle during fitting. The method involves the bunk being lifted into the cab from in front via the windscreen aperture and being positioned by means of guide devices or locating studs on at least two guide means or guide rails situated side by side against the cab's supporting structure and running in the vehicle's longitudinal direction. The bunk is thereafter pushed rearwards by the fitter towards the cab's rear wall/inner panel. When the bunk has been moved or pushed to its final position, the locating studs will reach recesses in the guide rails, whereupon the locating studs and the bunk will drop. Brackets attached to the bunk and provided with connection means in the form of hinges will drop, due to the weight of the bunk, into mounting means provided for the purpose and associated with the wall/inner panel and will be firmly locked hingingly therein by means of spring-loaded latches therein provided.

The advantages of the invention are that the fitting of bunks of the kind indicated in the introduction is easier and quicker and can be done more safely. Moving the bunk in sideways is facilitated by the guide rails, which have side edges angled outwards and a hopper-like profile. When they have been placed in the guide rails, the fitter can easily use the bunk's locating studs to push the bunk rearwards towards its final position, and the bunk will of its own weight drop into a locked and finally fitted position. The fitter will not be subject to any heavy lifting or to awkward postures and the whole fitting operation will be completed in a short time, with consequent manufacturing cost advantages for the vehicle.

Further features and advantages of the invention are indicated by the more detailed description of the invention set out below and the accompanying drawings and other claims.

### BRIEF LIST OF THE DRAWINGS

The invention is described in more detail below in various preferred embodiment examples with reference to the attached drawings.
**Figures 1a****-d** depict various steps in the bunk fitting method according to the invention.
**Figure 2** depicts a view obliquely from in front of a mounting device and guide rail according to the invention, and parts of the cab's supporting structure.
**Figure 3** depicts a mounting as seen obliquely from in front in more detail.
**Figure 4** depicts in more detail from the side a section through the mounting according to the invention.
**Figure 5** depicts in more detail, as seen obliquely from below, a bracket attached to the bunk.
**Figure 6** depicts in side view a fitting stage in which the bunk is on its way down towards the guide rail.
**Figure 7** depicts schematically a section through the guide rail.
**Figures 8a****-b** depict the bunk and its functional parts as seen from below.
**Figure 9** depicts the hinge pin of a bracket pushed down into the mounting and locked firmly by the latch.
**Figure 10** depicts a fitting aid in the form of an alternative and easily removable guide rail.

### DESCRIPTION OF PREFERRED EMBODIMENTS

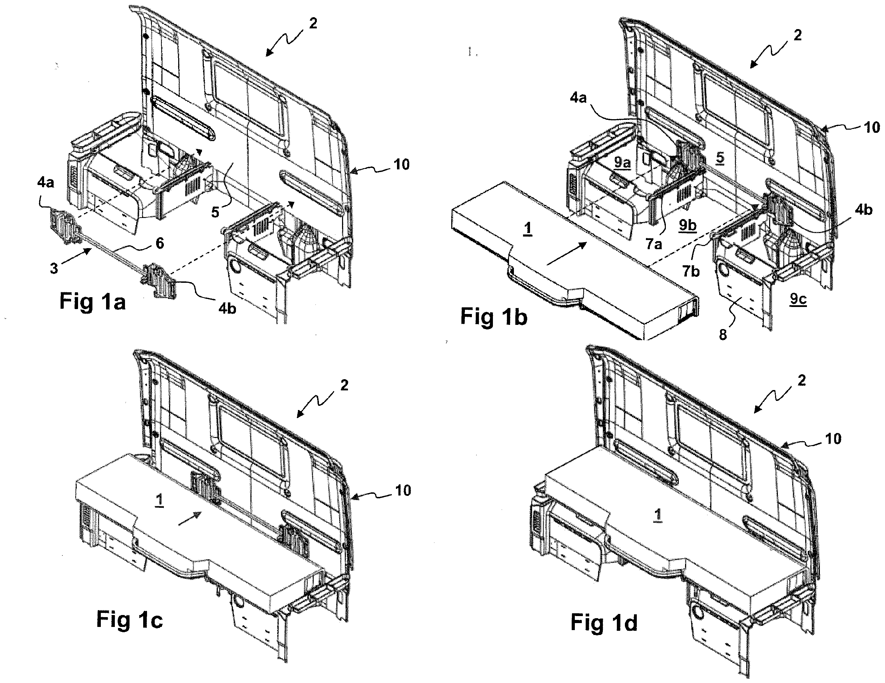

**Figures 1a****-d** thus depict various steps in the method according to the invention for fitting a bunk 1 in a limited space, here in a cab 2 for a heavy/commercial vehicle, e.g. a truck. **Figure 1a** shows how a mounting device 3 with at least two mountings 4a,b intended for the bunk 1 is initially situated/positioned and fitted in or at the cab's rear wall or inner panel 5. In this case the two mountings 4a, b are connected to one another by an intermediate member 6, e.g. made of metal, and are thereby integrated to form a mounting device 3 which makes it easier to more exactly position and fit the bunk 1 relative to the wall/inner panel 5. The fact that the two mountings 4a,b are connected together not only achieves an improved collision characteristic but also ensures that exactly correct spacing and angles are maintained between the two mountings 4 a,b, thereby contributing to easier and more correct fitting. A further object of the member 6 is to absorb collision force. **Figure 1b** shows how the bunk 1 is lifted into the cab 2 by means of an undepicted bunk lifting device and is about to be placed on guide means or guide rails 7a,b situated in a supporting structure 8 in the rear space of the cab 2. The supporting structure 8 does at the same time comprise, under the bunk 1, storage spaces 9a-c which may be used for storage of tools, work clothes and other objects. A refrigerator (not depicted) is usually situated in the middle of the supporting structure 8. The outer storage spaces 9a,c are usually reachable from outside the vehicle via side hatches (not depicted) provided for the purpose in the outer bodywork or frame structure 10 of the cab 2. **Figure 1c** shows how the bunk 1 is moved in towards, and how its guide devices (not depicted) are placed in, guide rails 7a,b in which they then rest, and the bunk is about to be moved or pushed towards the rear wall/inner panel 5 of the cab 2. **Figure 1d** shows the bunk 1 when it has been moved or pushed rearwards towards its final fitting position and has been locked in position by the mountings 4a,b.

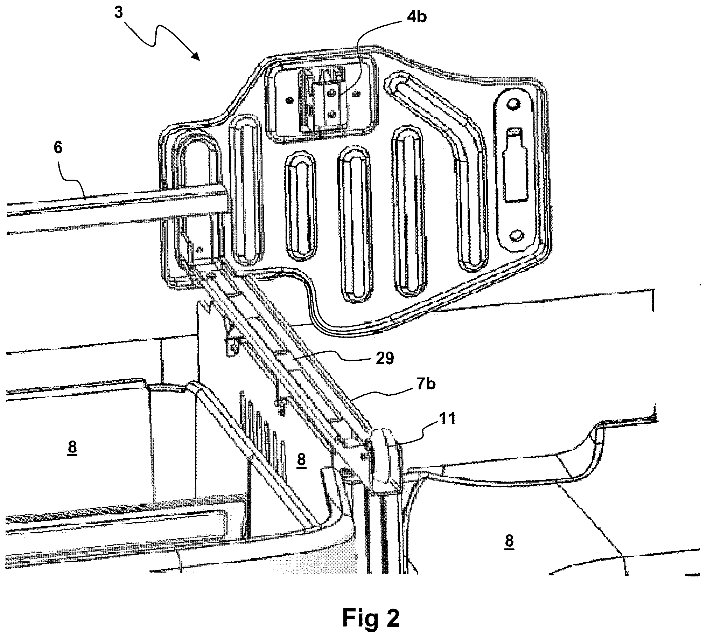

**Figure 2** depicts a view obliquely from in front of a right guide rail 7b and a right mounting 4b of the mounting device 3. The mounting 4b is here fitted to the rear wall/inner panel 5 of the cab 2 and the guide rail 7b is firmly attached in the vehicle's longitudinal direction to part of the cab's supporting structure 8. The guide rail 7b is provided at its forward end, as viewed in the vehicle's driving direction, with a supporting wheel 11 and is fitted at its rear end to the integrated mounting device via a threaded or welded connection. The supporting wheel 11 is adapted to supporting the bunk 1 from below when the bunk is in its final fitted position.

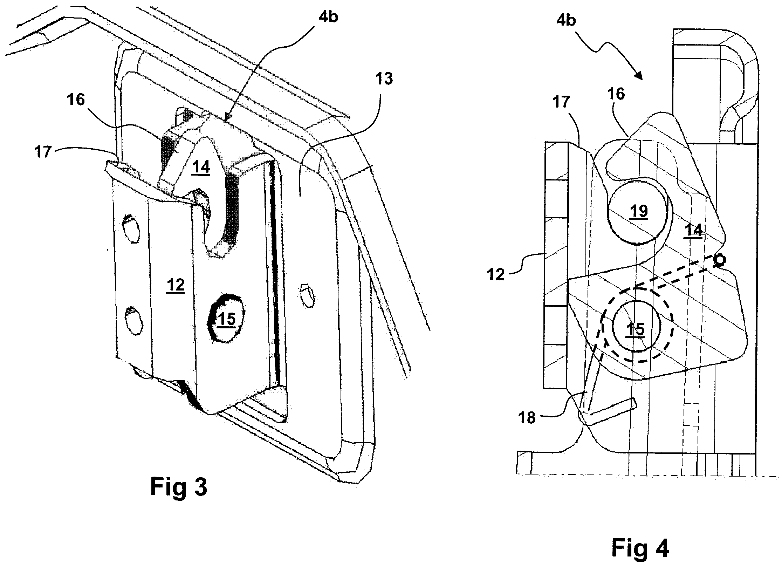

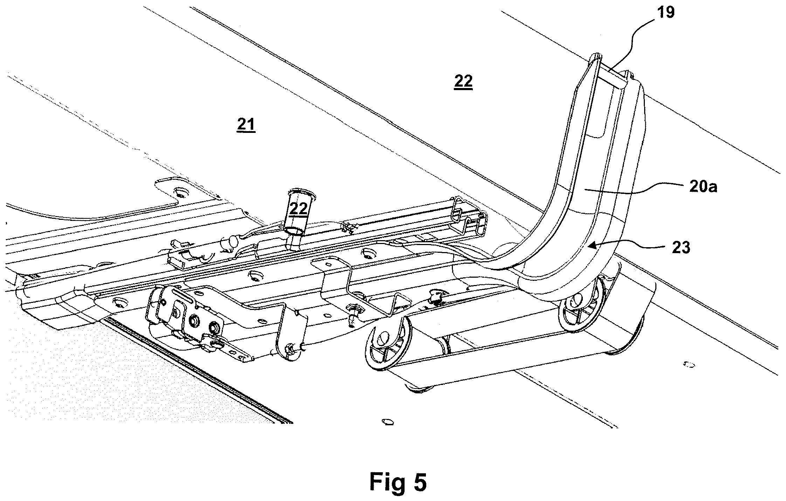

**Figure 3** depicts the mounting 4b in more detail as seen obliquely from in front. The mounting 4b comprises mainly a metal housing 12 fitted, e.g. by a welded connection, in a flange 13 in the mounting device 3, in which housing 12 a latch 14 is arranged for articulation about a spindle 15. The latch 14 is provided at the top with a chamfer 16 by means of which it can be forced rearwards to an open position against the action of a spring (not depicted). The housing 12 is also provided at the top at the front with a chamfer 17 which is opposite in direction to the chamfer 16 of the latch 14 and which makes it easier to guide into the mounting 4b a hinge pin provided in the bracket (see Figure 5).

**Figure 4** depicts in more detail as seen in side view a section through the mounting 4b according to the invention. The latch 14 disposed in the inner space of the housing 12 takes the form at the top of a hook and is urged to pivot anticlockwise (in the diagram) about its spindle 15 by a preloaded spring 18. The housing's chamfer 17, like the latch's chamfer 16, is configured to guide a connecting means disposed in the bunk, in the form of a hinge pin 19 in the bunk's bracket 20 (see Figure 5), down into the mounting 4b and thereby push the latch 14 clockwise to an open position so that the hinge pin 19 can drop all the way down into the mounting 4b. Thereafter the latch 14 reverts to a locking position and locks firmly the hinge pin 19 and hence the bracket and the bunk 1.

**Figure 5** depicts in more detail as seen obliquely from below one of the brackets 20 fitted to the bunk 1. The bracket 20 is fitted to the bottom 21 of the bunk 1, which bottom may be made of steel, plywood or composite material, and more specifically to the portion of the dividable bunk which constitutes the fixed element, i.e. the element which does not move when the width of the bunk 1 is altered. The bracket 20 extends transversely to the longitudinal direction of the bunk 1 and out past a long side 22 of the bunk 1 which faces towards the wall, and continues in the form of a curved portion 23 with a suitable radius before extending finally up along the bunk's long side 22. The curved portion 23 of the bracket 20 extends initially somewhat downwards before turning upwards, thereby being intended to provide space for the fabric, and, where applicable, the filling, which will need to be pushed downwards or upwards along the bunk's long side 22, depending on whether the bunk 1 is being put into its wider or narrower state. At least one locating stud 24 is also provided at the bottom of the bunk beside the bracket 20 and is made of low-friction material, e.g. plastic material.

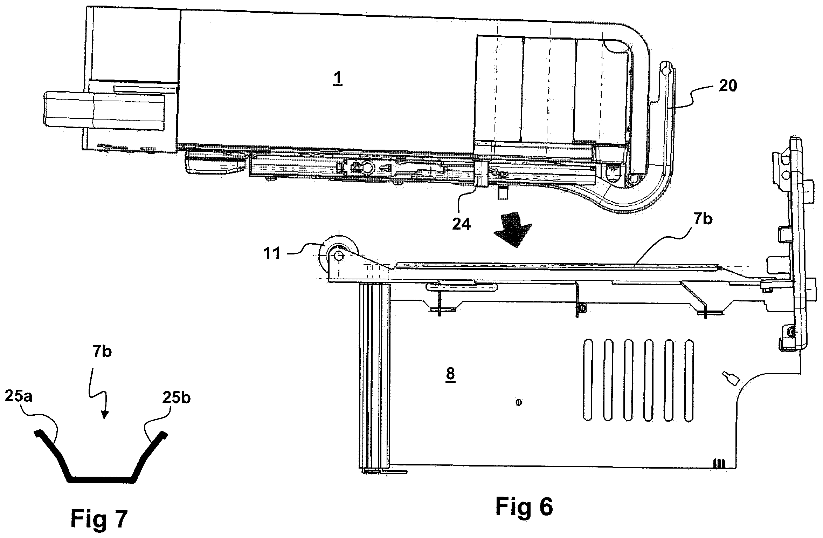

**Figure 6** depicts in side view the bunk 1, the bracket 20a fitted to the bunk's bottom 21, and a locating stud 24. The bunk 1 is at one of the fitting stages in which the locating stud 24 is about to be lowered into a guide rail 7b. When the locating stud 24 has been lowered into the guide rail 7b, the fitter can push the bunk rearwards, relative to the vehicle's driving direction, to its final fitting position. The bunk 1 is provided with at least two locating studs 24a,b, e.g. made of plastic material, and the cab's supporting structure 8 is provided with at least two guide rails 7a,b, e.g. made of metal.

**Figure 7** depicts a section through a guide rail 7a,b in which it may seen that its side edges 25a,b are angled/obliquely positioned outwards away from its notional centreline so that the profile forms a hopper shape to make it easier to move the locating studs 24a,b into the guide rails 7a,b during the fitting of the bunk 1 and thereby ensure that the bunk 1 is positioned correctly sideways in the cab 2. At least two guide rails 7a,b are needed for the fitting operation according to this procedure and it is therefore also possible that each guide rail 7a,b may only have one side edge (not depicted). In that case, the two guide rails will still together have two obliquely positioned side edges 25a,b, each preferably oriented in its respective direction, which is sufficient to allow the bunk 1 to be moved in.

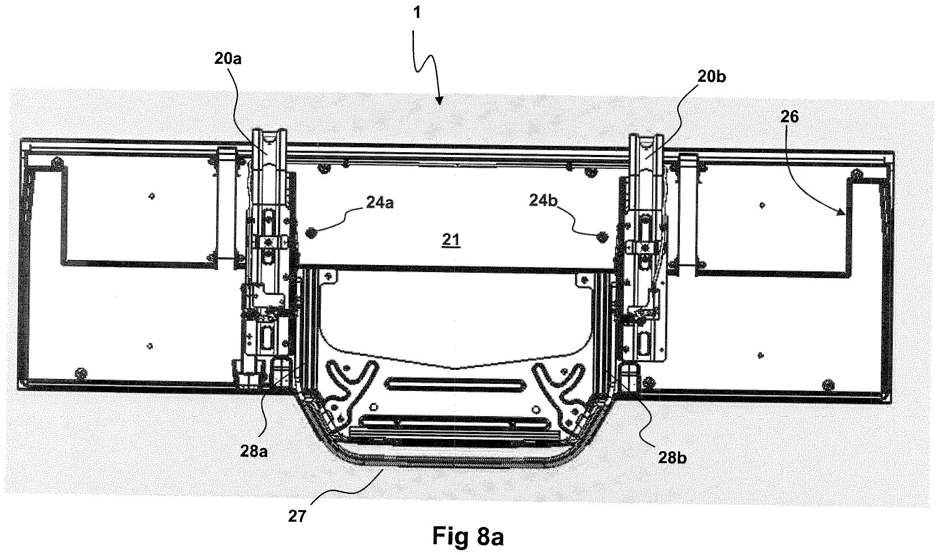

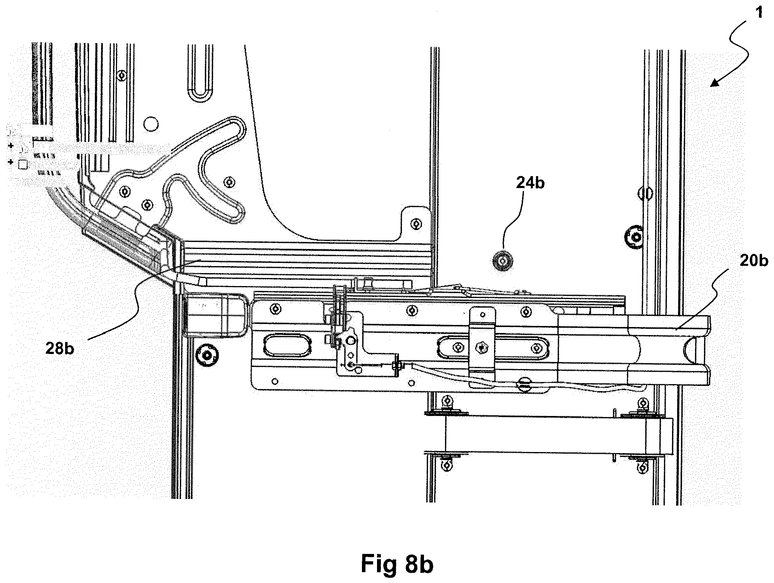

**Figures 8a****-b** depict the bunk 1 as seen from below and functional parts fitted to its bottom 21. **Figure 8a** shows for example that the bunk 1 can be divided, drawn apart, in a conventional manner, along a dividing line 26. A handle 27 provided at the forward long side 28 of the bunk 1 is intended to make it easier for the user to set the width of the bunk 1 but also to make it easier to lift the bunk 1 for access to the storage spaces 9a-c provided in the supporting structure 8. Two brackets 20a,b are provided at the bunk's bottom 21 and extend out past the edge of the rear/inner long side 22 of the bunk 1. Locating studs 24a,b are provided in the fixed bottom element of the bunk 1 beside or within the brackets 20a,b, i.e. nearer to the centre of the bunk 1, which means that the brackets 20a,b and the guide rails 7a,b will not normally come into contact with one another during the pushing-in phase and will therefore not affect the lowering or moving of the bunk 1 into its final fitted position. Running rails 28a,b are also fitted in the bottom 21 of the bunk and are intended to cooperate with the supporting wheels 11 provided at the outer ends of the guide rails 7a,b. **Figure 8b** shows the bunk 1, the bracket 20b, the locating stud 24b and the running rail 28b in more detail as seen from below.

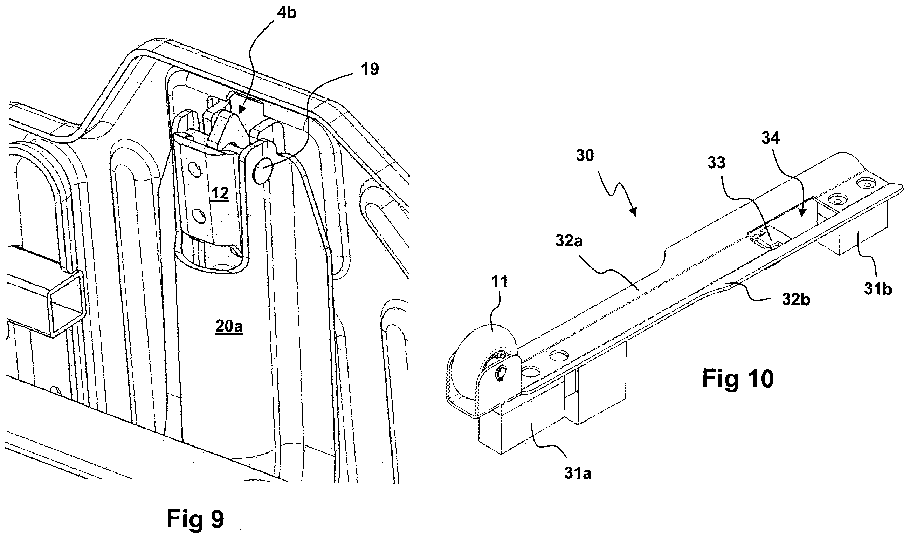

**Figure 9** depicts a bracket 20a and its hinge pin 19 in a connected and locked state with the mounting 4b. When the locating studs 24a,b have been lowered in and abut against the bottom of the guide rails 7a,b, the fitter can easily push the bunk 1 towards the rear wall/inner panel 5 of the cab 2. The length/height of the locating studs 24a,b is such that the connecting means provided in the brackets 20a,b, or the hinge pins 19, will be at a height position just above the mountings 4a,b, and when the locating studs 24a,b are just above the mountings 4a,b at the inner panel 5, the locating studs 24a,b will have simultaneously reached recesses 29 (see Figure 2) in the bottom of the guide rails 7a,b, whereupon they will drop into the recesses 29. Therefore the bunk 1 will also drop by its own weight, and the hinge pins 19 of the brackets will forcefully strike from above the chamfered edges 16,17 of the latches 14 and of the housing 12, thereby forcing the latches 14 to open against the force of the springs 18. This results in the hinge pin 19 dropping all the way down into the hook-like recesses of the latches 14, after which the springs 18 will urge the latches 14 to automatically revert or snap back to their locking positions. The brackets 20 and the bunk 1 are thereby locked to the mounting device 3.

Each mounting 4a,b and bracket 20a,b constitute a hinge which makes it possible for the bunk 1 at least partly to be folded up towards the wall/inner panel to provide access to the storage spaces 9a-c situated under the bunk 1. Folding the bunk 1 upwards is facilitated by conventionally arranged gas springs (not depicted).

**Figure 10** depicts a fitting aid in the form of an alternative and easily removable guide rail 30. This alternative guide rail 30 is provided on its underside with block-like fitting supports 31a,b which fit into, and may temporarily during the fitting phase be pressed down into, the fixed guide rails 7a,b integrated with the cab's/the bunk's supporting structure 8. This alternative guide rail 30 has side edges 32a,b angled outwards more than the integrated guide rail 7a,b and hence has a wider hopper shape which make it easier to position correctly the locating studs 24a,b of the bunk 1. This alternative guide rail 30 also has a portion 33 which is angled upwards or raised and is situated close to and in front, in the vehicle's direction, of the recess 34 in rail 30, which means that when the fitter pushes the bunk 1 rearwards the rear portion of the bunk 1 will be forced somewhat upwards before the locating studs 24a,b drop into the recess in the rail 30, causing the hinge pins 19 of the brackets 20 to drop with greater force towards the latches 14, push the latches 14 to open positions and drop all the way down into the mountings 4a,b. The upward-sloping or raised portion 33 thus strengthens the upward movement of the bunk 1, resulting in a greater drop height and thereby achieving more secure locking. After the fitting operation, these alternative guide rails 30 are removed and used again for subsequent fitting operations.

The above description is primarily intended to facilitate comprehension of the invention. Therefore, the invention is of course not limited to the embodiments indicated, since other variants of the invention are also possible and conceivable within the scope of the concept of the invention and the scope of protection of the claims set out below. Moreover, the invention is of course not limited solely to applications in a vehicle, since it is also usable with advantage in other contexts where it is desired to fit a bunk against a wall in limited and cramped spaces, e.g. in dormobiles, caravans, boats etc. It is of course also conceivable, instead of fitting guide rails on a supporting structure and having locating studs on the underside of the bunk, to do the opposite, i.e. exchange their places. Similarly, it is of course possible for the running rail and the supporting roller also to change places. What is also conceivable, in the same way as the alternative guide rail is provided with sides which are more distinctly angled outwards and a portion which is raised or angled upwards close to and in front of the recess, is that this same arrangement might also be provided in the guide rail first described which is integrated with the cab's or the bunk's supporting structure.

## Claims

1. A method for fitting in a limited space adjacent to a wall/inner panel (5) a bunk (1) which is preferably of adjustable width and rests on a supporting structure (8), wherein at least one mounting (4a,b) is first fitted to the wall/inner panel (5), **characterised**
**in that** guide means (24a,b) attached to the bunk are moved in towards, and lowered into, guide means (7a,b,30) provided on/associated with the supporting structure (8),
- in that the bunk (1) is pushed/moved towards the wall/inner panel (5) and towards its final fitting position, and
- in that the bunk (1) is caused by its own weight to push at least one connecting means (19) down into the mounting (4a,b), thereby causing the latter to hingingly lock the bunk (1) firmly in position.

2. A method according to claim 1,
***characterised***
- **in that** the guide means (24a,b) of the bunk (1) are pushed/moved into the guide means (7a,b,30) across a raised portion (33) and thereby impart to the bunk (1) a substantially vertical movement with the result that the locking means (19,20) of the bunk (1) drop with greater force into the mounting (4a,b).

3. A method according to claim 1 or 2,
***characterised***
- **in that** the connecting means (19,20) of the bunk (1) are caused to automatically become locked firmly in the mounting (4a,b).

4. A system for fitting a bunk (1) in a limited space, comprising a bunk (1) which is preferably of variable and adjustable width, a wall/inner panel (5) which the bunk is intended to be fitted adjacent to, and a supporting structure (8) on which the bunk is intended to rest/bear, wherein a mounting device (3) is provided with at least two mountings (4a,b) at the wall/inner panel (5) against which the bunk (1) is intended to be fitted, **characterised**
- **in that** the bunk (1) is provided with guide devices (24) which fit into guide means (7a,b) provided on or associated with the supporting structure (8) in the limited space,
- **in that** the bunk (1) is adapted to being pushed/moved by means of the guide devices (24) towards its final fitting position, and
- **in that** connection means (19,20) are associated with the bunk (1) and are pushed down into the mounting by the weight of the bunk (1).

5. A system according to claim 4, ***characterised by***
- comprising at least one guide rail (7a,b,30) which is provided with at least one recess (34) in its bottom.

6. A system according to claim 5,
***characterised***
- **in that** the guide rail (7a,b,30) is provided with a raised portion (33) at the bottom of the guide rail (7a,b,30) close to/before said recess (34).

7. A system according to claim 5 or 6,
***characterised***
- **in that** the guide rail (7a,b,30) is provided with at least one side edge (32a,b) which is angled outwards obliquely away from the notional centreline of the guide rail (7a,b,30).

8. A system according to claims 5-7,
***characterised***
- **in that** the guide rail (7a,b,30) runs parallel with the vehicle's longitudinal direction.

9. A system according to any one of claims 4-8,
***characterised***
- **in that** locating studs (24a,b) are provided at the bottom (21) of the bunk (1) and are intended to cooperate with the guide rail (7a,b,30).

10. A system according to claim 9,
***characterised***
- **in that** the locating studs (24a,b) are substantially cylindrical in shape and made of low-friction material.

11. A system according to any one of claims 4-10,
***characterised by***
- a mounting device (3) for fitting a bunk (1) in a limited space, comprising a bunk (1) which is preferably of variable and adjustable width, a wall/inner panel (5) which the bunk (1) is intended to be fitted adjacent to, and a supporting structure (8) on which the bunk (1) is intended to rest/bear, whereby at least two mountings (4a,b) are integrated with one another via at least one member (6).

12. A system according to any one of claims 4-11,
***characterised by***
- a mounting (4a,b) for fitting a bunk in a limited space, and in that a housing (12) is adapted to accommodating a spring-loaded latch (14).

13. A system according to claim 12,
***characterised***
- **in that** the mounting (4a,b) takes the form of a hinge and makes it possible for the bunk (1) in a fitted state to be folded up.

## Patentansprüche

1. Verfahren zum Einfügen einer Pritsche (1) in einem begrenzten Raum anschließend an eine Wand/ein inneres Paneel (5), die vorzugsweise eine anpassbare Breite aufweist und auf einer Stützstruktur (8) lagert,
wobei mindestens eine Aufnahme (4a,b) zuerst an der Wand/dem inneren Paneel (5) montiert wird,
**dadurch gekennzeichnet, dass**
- Führungsmittel (24a,b), die an der Pritsche angebracht sind, hin zu Führungsmitteln (7a,b,30) einwärts bewegt werden und darin abgesenkt werden, die auf der Stützstruktur (8) vorgesehen/an ihr angeordnet sind,
- die Pritsche (1) gegen die Wand/das innere Paneel (5) und gegen seine finale Montageposition gedrückt/bewegt wird, und
- die Pritsche (1) durch deren eigenes Gewicht dazu veranlasst ist, mindestens ein Verbindungsmittel (19) herunter in die Aufnahme (4a,b) zu drücken, und dabei Letzteres zu veranlassen, die Pritsche (1) fest in der Position einhängend zu befestigen.

2. Verfahren nach Anspruch 1, **dadurch gekennzeichnet, dass**
- die Führungsmittel (24a,b) der Pritsche (1) in die Führungsmittel (7a,b,30) über einen erhöhten Abschnitt (33) gedrückt/bewegt werden und dabei eine im Wesentlichen vertikale Bewegung auf die Pritsche (1) mit dem Ergebnis übertragen wird, dass die Verbindungsmittel (19,20) der Pritsche (1) mit einer größeren Kraft in die Aufnahme (4a,b) fallen.

3. Verfahren nach Anspruch 1 oder 2, **dadurch gekennzeichnet, dass**
- die Verbindungsmittel (19,20) der Pritsche (1) dazu veranlasst sind, automatisch in der Aufnahme (4a,b) fest verriegelt zu werden.

4. System zum Einfügen einer Pritsche (1) in einem begrenzten Raum, umfassend eine Pritsche (1), die vorzugsweise eine veränderbare und anpassbare Breite aufweist, eine Wand/ein inneres Paneel (5), an dem die Pritsche vorgesehen ist, anschließend montiert zu werden, und eine Stützstruktur (8), an der die Pritsche vorgesehen ist, zu verbleiben/zu lagern,
wobei eine Montagevorrichtung (3) mit wenigstens zwei Aufnahmen (4a,b) an der inneren Wand/dem inneren Paneel (5) ausgestattet ist, gegen welche/welches die Pritsche (1) vorgesehen ist, montiert zu werden,
**dadurch gekennzeichnet, dass**
- die Pritsche (1) mit Führungsvorrichtungen (24) ausgestattet ist, die in die Führungsmittel (7a,b) passen, die in dem begrenzten Raum auf der Stützstruktur (8) vorgesehen oder an ihr angeordnet sind,
- die Pritsche (1) dazu eingerichtet ist, durch Mittel der Führungsvorrichtungen (24) in ihre finale Montageposition gedrückt/bewegt zu werden, und
- Verbindungsmittel (19, 20) an der Pritsche (1) angeordnet sind und durch das Gewicht der Pritsche (1) herunter in die Halterung gedrückt werden.

5. System nach Anspruch 4, **dadurch gekennzeichnet, dass**
- es wenigstens eine Führungsschiene (7a,b,30) umfasst, die mit wenigstens einer Aussparung (34) an dessen Unterseite ausgestattet ist.

6. System nach Anspruch 5, **dadurch gekennzeichnet, dass**
- die Führungsschiene (7a,b,30) mit einem erhöhten Abschnitt (33) auf der Unterseite der Führungsschiene (7a,b,30) nahe/vor der Aussparung (34) ausgestattet ist.

7. System nach Anspruch 5 oder 6, **dadurch gekennzeichnet, dass**
- die Führungsschiene (7a,b,30) mit wenigstens einer Seitenkante (32a,b) ausgestattet ist, die nach außen schräg weg von der fiktiven Mittellinie der Führungsschiene (7a,b,30) gewinkelt ist.

8. System nach Ansprüchen 5-7, **dadurch gekennzeichnet, dass**
- die Führungsschiene (7a,b,30) parallel zur Längsrichtung des Fahrzeugs verläuft.

9. System nach einem der Ansprüche 4-8, **dadurch gekennzeichnet, dass**
- Positionierstifte (24a,b) auf der Unterseite der Pritsche (1) vorgesehen sind und dazu vorgesehen sind, mit der Führungsschiene (7a,b,30) zusammenzuwirken.

10. System nach Anspruch 9, **dadurch gekennzeichnet, dass**
- die Positionierstifte (24a,b) in der Form im Wesentlichen zylindrisch und aus einem Material geringer Reibung hergestellt sind.

11. System nach einem der Ansprüche 4-10, **gekennzeichnet durch**
- eine Montagevorrichtung (3) zum Montieren einer Pritsche (1) in einem begrenztem Raum, umfassend eine Pritsche (1), die vorzugsweise eine veränderbare und anpassbare Breite aufweist, eine Wand/ein inneres Paneel (5), an dem die Pritsche (1) vorgesehen ist, anschließend montiert zu werden, und eine Stützstruktur (8), an der die Pritsche (1) vorgesehen ist, zu verbleiben/zu lagern, wobei wenigstens zwei Aufnahmen (4a,b) **durch** wenigstens ein Glied (6) miteinander integriert sind.

12. System nach einem der Ansprüche 4-11, **gekennzeichnet durch**
- eine Aufnahme (4a,b) zum Montieren einer Pritsche in einem begrenzten Raum, und dass ein Gehäuse (12) dazu eingerichtet ist, eine Federverriegelung (14) unterzubringen.

13. System nach Anspruch 12, **dadurch gekennzeichnet, dass**
- die Aufnahme (4a,b) die Ausgestaltung eines Gelenks aufweist und es möglich macht, dass die Pritsche (1) in einem montierten Zustand hochgeklappt wird.

## Revendications

1. Procédé pour insérer, dans un espace limité adjacent à une paroi/un panneau intérieur (5), une couchette (1) qui est de préférence de largeur réglable et repose sur une structure de support (8),
dans lequel au moins une fixation (4a, b) est d'abord montée sur la paroi/le panneau intérieur (5), **caractérisé en ce que**
- des moyens de guidage (24a, b) fixés à la couchette sont déplacés vers, et abaissés dans, des moyens de guidage (7a, b, 30) prévus sur/associés à la structure de support (8),
- **en ce que** la couchette (1) est poussée/déplacée vers la paroi/le panneau intérieur (5) et vers sa position de montage finale, et
- en ce la couchette (1) est amenée par son propre poids à pousser au moins un moyen de liaison (19) dans la fixation (4a, 4b), entraînant alors celle-ci à verrouiller de manière articulée la couchette (1) fermement en position.

2. Procédé selon la revendication 1,
**caractérisé en ce que**
- les moyens de guidage (24a, b) de la couchette (1) sont poussés/déplacés dans les moyens de guidage (7a, b, 30) au travers d'une partie surélevée (33) et communiquent ainsi à la couchette (1) un mouvement sensiblement vertical, ce qui permet aux moyens de verrouillage (19, 20) de la couchette (1) de tomber avec une force accrue dans la fixation (4a, b).

3. Procédé selon la revendication 1 ou 2,
**caractérisé en ce que**
- les moyens de liaison (19, 20) de la couchette (1) sont amenés à se verrouiller automatiquement fermement dans la fixation (4a, b).

4. Système destiné à insérer une couchette (1) dans un espace limité, comprenant une couchette (1), qui est de préférence de largeur variable et réglable, une paroi/un panneau intérieur (5) auquel la couchette est destinée à être fixée de manière adjacente, et une structure de support (8) sur laquelle la couchette est destinée à être posée/supportée,
dans lequel
un dispositif de montage (3) est pourvu d'au moins
deux fixations (4a, b) au niveau de la paroi/du panneau intérieur (5) contre lequel la couchette (1) est destinée à être montée,
**caractérisé :**
- **en ce que** la couchette (1) est pourvue de dispositifs de guidage (24) qui s'insèrent dans des moyens de guidage (7a, b) prévus sur ou associés à la structure de support (8) dans l'espace limité,
- **en ce que** la couchette (1) est adaptée à être poussée/déplacée au moyen des dispositifs de guidage (24) vers sa position de montage finale, et
- **en ce que** les moyens de liaison (19, 20) sont associés à la couchette (1) et sont poussés dans la fixation sous l'effet du poids de la couchette (1),

5. Système selon la revendication 4, **caractérisé en ce qu'**il
- comprend au moins un rail de guidage (7a, b, 30) qui est pourvu d'au moins un évidement (34) dans sa partie inférieure.

6. Système selon la revendication 5,
**caractérisé en ce que**
le rail de guidage (7a, b, 30) est pourvu d'une partie surélevée (33) au niveau de la partie inférieure du rail de guidage (7a, b, 30) à proximité/avant ledit évidement (34).

7. Système selon la revendication 5 ou 6,
**caractérisé en ce que**
le rail de guidage (7a, b, 30) est pourvu d'au moins un bord latéral (32a, b) qui est coudé vers l'extérieur de manière oblique par rapport à l'axe central fictif du rail de guidage (7a, b, 30).

8. Système selon les revendications 5 à 7,
**caractérisé en ce que**
- le rail de guidage (7a, b, 30) s'étend parallèlement à la direction longitudinale du véhicule.

9. Système selon l'une quelconque des revendications 4 à 8,
**caractérisé en ce que**
- des goujons de fixation (24a, b) sont prévus au niveau de la partie inférieure (21) de la couchette (1) et sont destinés à coopérer avec le rail de guidage (7a, b, 30).

10. Système selon la revendication 9,
**caractérisé en ce que**
- les goujons de fixation (24a, b) ont une forme sensiblement cylindrique et sont réalisés dans un matériau à faible coefficient de frottement.

11. Système selon l'une quelconque des revendications 4 à 10,
**caractérisé par**
- un dispositif de montage (3) pour insérer une couchette (1) dans un espace limité, comprenant une couchette (1) qui est de préférence de largeur variable et réglable, une paroi/un panneau intérieur (5) auquel la couchette est destinée à être fixée de manière adjacente, et une structure de support (8) sur laquelle la couchette est destinée à reposer/supporter, dans lequel au moins deux fixations (4a, b) sont intégrées l'une à l'autre via au moins un élément (6).

12. Système selon l'une quelconque des revendications 4 à 11,
**caractérisé par**
- une fixation (4a, b) pour insérer une couchette (1) dans un espace limité, et en ce qu'un boîtier (12) est adapté pour loger un verrou à ressort (14).

13. Système selon la revendication 12,
**caractérisé en ce que**
- la fixation (4a, b) a la forme d'une charnière et permet à la couchette (1) d'être repliée à l'état monté.
